# EUROPEAN PATENT SPECIFICATION

(11) **EP 4 082 910 B1**
(45) Date of publication and mention of the grant of the patent: **22.01.2025**
(21) Application number: 22170652.6
(22) Date of filing: 28.04.2022
(51) Int. Cl.: B64D 13/06

(54) **ALL ELECTRIC ECS WITH CABIN OUTFLOW COOLED MOTOR DRIVES**
VOLLELEKTRISCHE ECS MIT KABINENABFLUSSGEKÜHLTEN MOTORANTRIEBEN
SYSTÈME DE COMMANDE ENVIRONNEMENTALE TOUT ÉLECTRIQUE DOTÉ D'ENTRAÎNEMENTS DE MOTEUR REFROIDIS PAR ÉCHAPPEMENT CABINE

(30) Priority: 29.04.2021 US 202163181646 P; 02.09.2021 US 202117465386
(43) Date of publication of application: 02.11.2022
(60) Divisional application: 24202028.7
(73) Proprietor: Hamilton Sundstrand Corporation, Charlotte, NC 28217-4578 (US)
(72) Inventor: HO, Tony, Glastonbury (US); BRUNO, Louis J., Ellington (US); COUTIN, Aiden, Enfield (US)
(74) Representative: Dehns

(56) References cited:
- WO-A1-2022/028992
- FR-A1- 3 048 231
- US-A- 4 262 495
- US-A- 5 701 755
- US-A1- 2017 341 767
- US-A1- 2018 331 599
- US-A1- 2019 112 052
- US-A1- 2019 135 441
- US-B1- 6 526 775
- US-B1- 9 669 936

## Description

### TECHNICAL FIELD

Exemplary embodiments of the disclosure relate to an environmental control system, and more particularly, to an environmental control system configured to receive a flow of air that is used to cool power electronics.

### BACKGROUND

In general, contemporary air condition systems are supplied a pressure at cruise that is approximately 30 psig to 35 psig (approximately 2.07 bar to 2.41 bar). The trend in the aerospace industry today is towards systems with higher efficiency. One approach to improve airplane efficiency is to eliminate the bleed air entirely and use electrical power to compress outside air. A second approach is to use lower engine pressure. The third approach is to use the energy in the bleed air to compress outside air and bring it into the cabin. Unfortunately, each of these approaches provides limited efficiency with respect to engine fuel burn.

FR 3 048 231 A1 proposes a system comprising an air conditioning unit using an electric motor coupled to the rotary shaft of an air cycle machine (ACM) so that the rotation of the shaft of the ACM is accelerated during phases of flight in which the aircraft engine speed is low, this being when a pressure and flow rate of the air entering the air conditioning unit is below a predetermined threshold. Through this mechanism, the compressor can increase the compression ratio of the air handled by the ACM when the pressure or flow rate of the incoming air is not high enough to supply the air conditioning unit.

WO 2022/028992 A1, which was published after the priority date of the present application therefore cannot be taken into account when considering inventive step, relates to a driven turbocompressor of an air conditioning system, comprising a compressor which is connected to an air intake duct and to an inlet of a cabin of a vehicle, and is configured to receive air from the air intake duct, to compress it and to provide it to the cabin, a motor that is configured to drive the compressor and is surrounded by a casing, a recovery turbine that is configured to expand the cabin air coming from an outlet of the cabin. The device is characterized in that it comprises a cooling duct configured to receive at least part of the expanded air so as to cool the casing of the motor and the motor.

### SUMMARY

According to an embodiment, an environmental control system includes a compression device including a compressor, a turbine, and an electric motor operably coupled by a shaft. The electric motor and the turbine are arranged in series relative to a flow of a first medium. The turbine is arranged downstream from the electric motor relative to the flow of the first medium.

Optionally, the flow of the first medium is configured to remove heat from one or more electronics of the electric motor.

Optionally, the environmental control system is operable in a plurality of modes including a first mode and a second mode, and a first portion of the flow of the first medium is provided to the electric motor and the turbine in series in both the first mode and the second mode.

Optionally, in the first mode, a second portion of the flow of the first medium is configured to bypass the compression device.

Optionally, in the first mode, the flow of the first medium is driven by a fan.

Optionally, the flow of the first medium is driven by a pressure of the first medium.

Optionally, in the first mode, the compressor is driven by the electric motor.

Optionally, in the second mode, the compressor is driven by the electric motor and the turbine.

Optionally, the environmental control system is part of an aircraft and the first medium is cabin air.

### BRIEF DESCRIPTION OF THE DRAWINGS

The following descriptions should not be considered limiting in any way. With reference to the accompanying drawings, like elements are numbered alike:
FIG. 1A is a schematic diagram of an environmental control system according to an embodiment;
FIG. 1B is a schematic diagram of an environmental control system according to another embodiment;
FIG. 2A is a schematic diagram of an environmental control system according to yet another embodiment;
FIG. 2B is a schematic diagram of an environmental control system according to yet another embodiment;
FIG. 3A is a schematic diagram of an environmental control system according to another embodiment;
FIG. 3B is a schematic diagram of an environmental control system according to another embodiment;
FIG. 4A is a schematic diagram of an environmental control system according to another embodiment; and
FIG. 4B is a schematic diagram of an environmental control system according to another embodiment.

### DETAILED DESCRIPTION

A detailed description of one or more embodiments of the disclosed apparatus and method are presented herein by way of exemplification and not limitation with reference to the Figures.

Embodiments herein provide an environmental control system of an aircraft that uses mediums from different sources to power the environmental control system and to provide cabin pressurization and cooling at a high fuel burn efficiency. The medium can generally be air, while other examples include gases, liquids, fluidized solids, or slurries.

With reference now to the FIGS., various schematic diagrams of a portion of an environment control system (ECS) 20, such as an air conditioning unit or pack for example, is depicted according to non-limiting embodiments. Although the environmental control system 20 is described with reference to an aircraft, alternative applications, such as other types of vehicles for example, are also within the scope of the disclosure.

As shown in the FIGS., the ECS 20 is configured to receive a first medium A1 at a first inlet 22. In embodiments where the ECS 20 is used in an aircraft application, the first inlet 22 is configured to receive a supply of air from a volume 24, such as from a passenger compartment of the vehicle. When the environmental control system is on a plane, the passenger compartment may be a cabin for example. In such embodiments, the first medium A1 may be cabin discharge air, which is air leaving the volume 24 and that would typically be discharged overboard. In some embodiments, the ECS 20 is configured to extract work from the first medium A1. In this manner, the pressurized air A1 of the volume 24 can be utilized by the ECS 20 to achieve certain operations.

In an embodiment, the first medium A1 provided at the inlet 22 has been used to cool at least one electronic component of the aircraft, illustrated schematically at 26. As shown, the electronic components 26 may be considered separate or not part of the ECS 20, and therefore are located upstream from the ECS 20 relative to the flow of the first medium A1. Examples of the electronic components 26 include, but are not limited to, a high voltage direct current power system, a ram fan motor controller, a compressor motor drive, and a transformer rectified unit. For example, a portion of the cabin discharge air A1, such as about 60% thereof for example, may be directed by a fan or other movement mechanism 28 across one or more electronic components 26 to remove heat therefrom 26 prior to being supplied to the ECS 20. The fan 28 may be selectively operable to drive the flow of the first medium A1 through the ECS 20.

The ECS 20 is also configured to receive a second medium A2 at an second inlet 30 and during normal operation is configured to provide a conditioned form of only the second medium A2 to the volume 24. In an embodiment, the second medium A2 is fresh air, such as outside air for example. The outside air can be procured via one or more scooping mechanisms, such as an impact scoop or a flush scoop for example. Thus, the inlet 30 can be considered a fresh or outside air inlet. In an embodiment, the second medium A2 is ram air drawn from a portion of a ram air circuit to be described in more detail below. Generally, the second medium A2 described herein is at an ambient pressure equal to an air pressure outside of the aircraft when the aircraft is on the ground and is between an ambient pressure and a cabin pressure when the aircraft is in flight.

The ECS 20 includes a RAM air circuit 32 including a shell or duct 34 within which one or more heat exchangers are located. The shell 34 can receive and direct a medium, such as ram air for example, through a portion of the ECS 20. The one or more heat exchangers are devices built for efficient heat transfer from one medium to another. Examples of the type of heat exchangers that may be used, include, but are not limited to, double pipe, shell and tube, plate, plate and shell, adiabatic shell, plate fin, pillow plate, and fluid heat exchangers.

The one or more heat exchangers arranged within the shell 34 may be referred to as ram heat exchangers. In the illustrated, non-limiting embodiment, the ram heat exchangers include a first or primary heat exchanger 36 and a second or secondary heat exchanger 38. Within the heat exchangers, a flow of air, such as ram or outside air for example, acts as a heat sink to cool a medium passing there through, for example the second medium A2. The secondary heat exchanger 38 may be located upstream from the primary heat exchanger 36 such that the temperature of the air provided to the primary heat exchanger 36 is higher (warmer) than the temperature of the air provided to the secondary heat exchanger 38. It should be understood that a ram air circuit 32 having any number and configuration of heat exchangers is contemplated herein.

The ECS 20 additionally includes at least one compression device. The at least one compression device is a mechanical device that includes components for performing thermodynamic work on a medium (e.g., extracts work from or applies work to the first medium A1, the second medium A2 by raising and/or lowering pressure and by raising and/or lowering temperature). Examples of a compression device include an air cycle machine, a two-wheel air cycle machine, a three-wheel air cycle machine, a four-wheel air cycle machine, etc.

In an embodiment, the ECS 20 includes a separate and distinct first compression device 40a and second compression device 40b. At least one component of each of the first and second compression device 40a, 40b are arranged in series relative to a flow of the second medium A2. Each compression device 40a, 40b includes a compressor 42a, 42b and at least one turbine 44a, 44b operably coupled by a shaft 46a, 46b. A compressor 42a, 42b is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. A turbine 44a, 44b is also a mechanical device and is configured to expand a medium and extract work therefrom (also referred to as extracting energy) to drive the compressor via the shaft. In the illustrated, non-limiting embodiment, the second compression device 40b includes a first turbine 44b and a second turbine 48, the second turbine 48 also being mounted to the shaft 46b and configured to drive the compressor 42b.

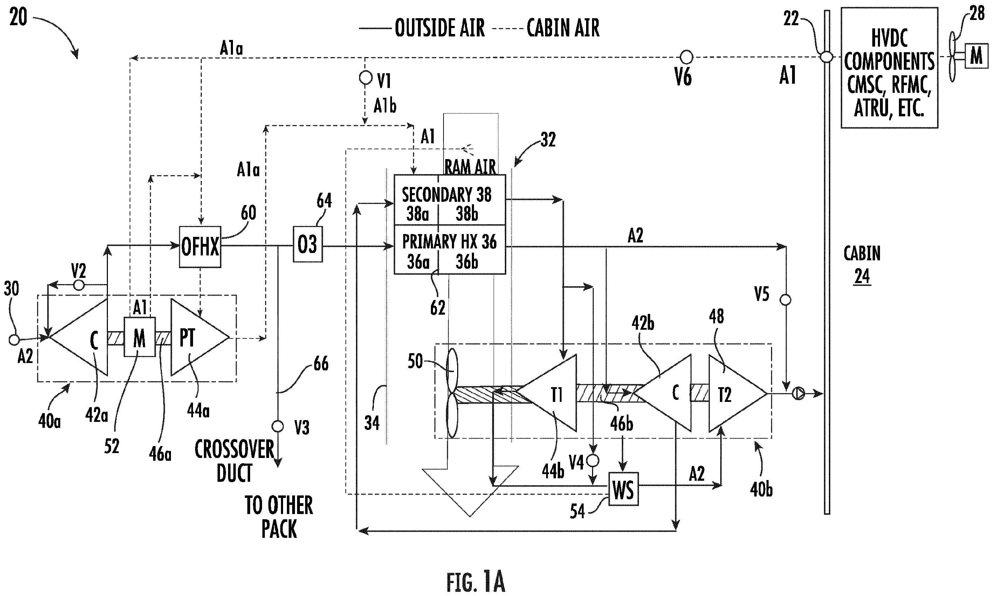

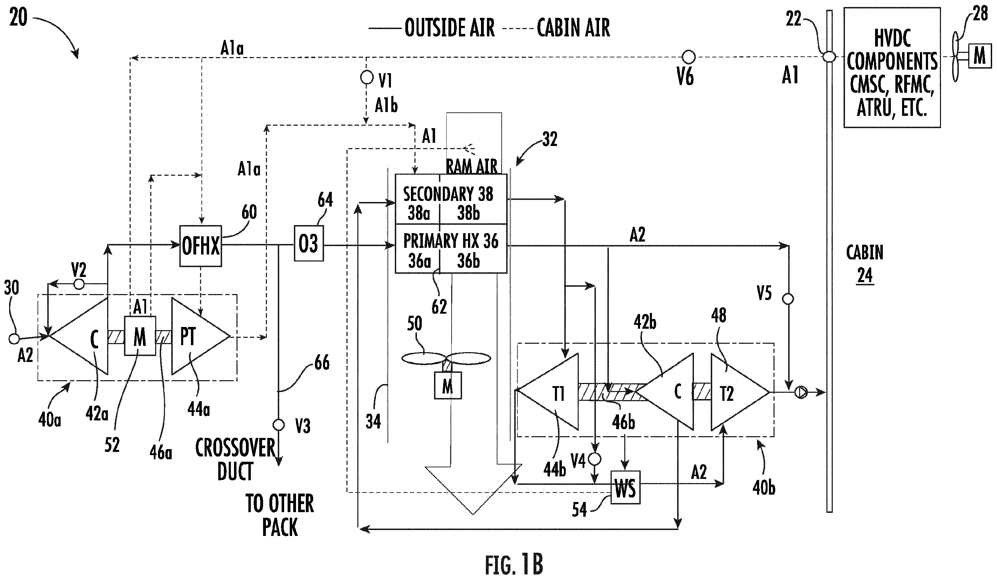

A fan 50 is a mechanical device that can force via push or pull methods air through the shell 34 of the ram air circuit 32, across at least a portion of the ram air heat exchangers. In an embodiment, best shown in FIGS. 1A, 2A, 3A, and 4A, the fan 50 is part (mounted to the shaft) of one of the compression devices of the ECS 20, such as the second compression device 40b for example. However, in other embodiments, best shown in FIGS. 1B, 2B, 3B, and 4B, the fan 50 may be separate from the compression devices and driven by any suitable mechanism, such as an electric motor for example.

In an embodiment, the first compression device 40a additionally includes a motor 52. The motor 52 is a mechanical/electrical device that can also drive the compressor 42a via the shaft 46a. The motor 52 may provide assistance, as needed, to drive the compressor 42a. In an embodiment, as will be described in more detail below, the first medium A1 may also be used to cool or remove heat from the motor 52.

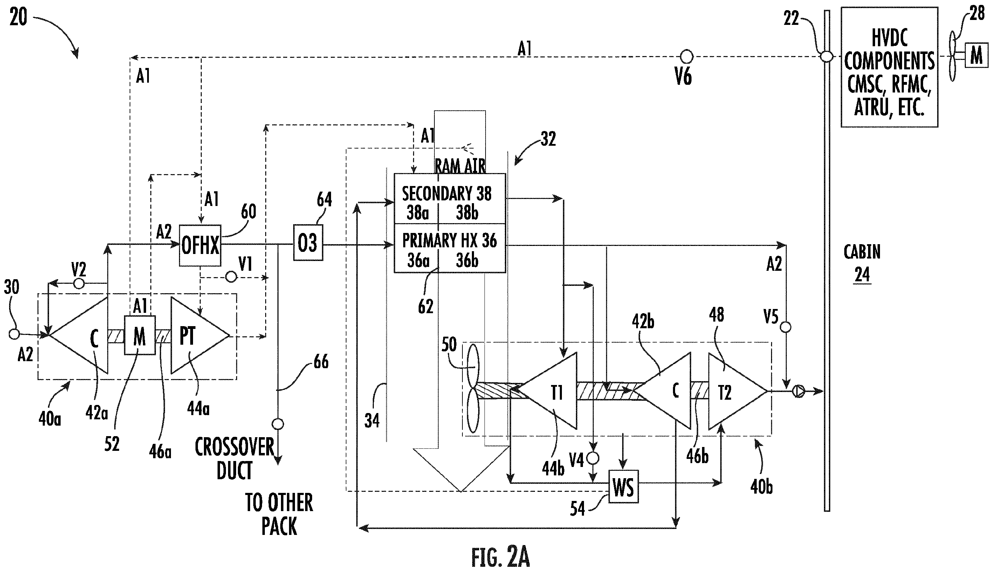

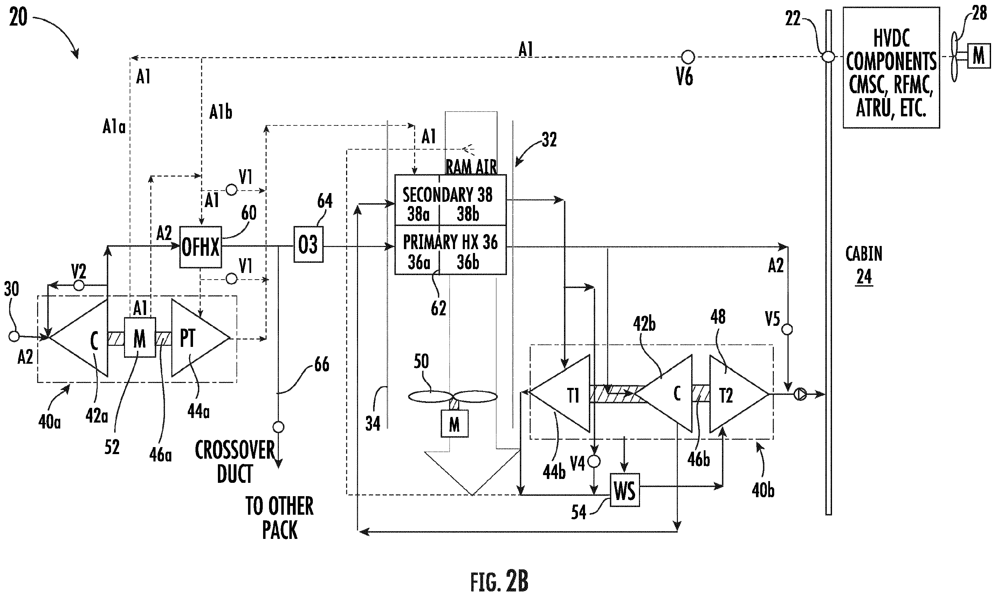

The ECS 20 may additionally include at least one dehumidification system. The dehumidification system may be arranged in fluid communication with the second medium A2. In the illustrated, non-limiting embodiments shown in FIGS. 1A, 1B, 2A and 2B, the dehumidification system includes a water extractor or collector 54. The water extractor 54 is a mechanical device that performs a process of removing water from a medium. As shown, the water extractor 54 is arranged directly downstream from an outlet of a turbine, such as turbine 44b of the second compression device 40b for example. In such embodiments, the turbine 44b is configured to function as a condenser because the temperature of the medium A2 within the turbine 44b is reduced as work is extracted therefrom. The turbine 44b and the water extractor 54 in combination may be referred to herein as a "midpressure water separator."

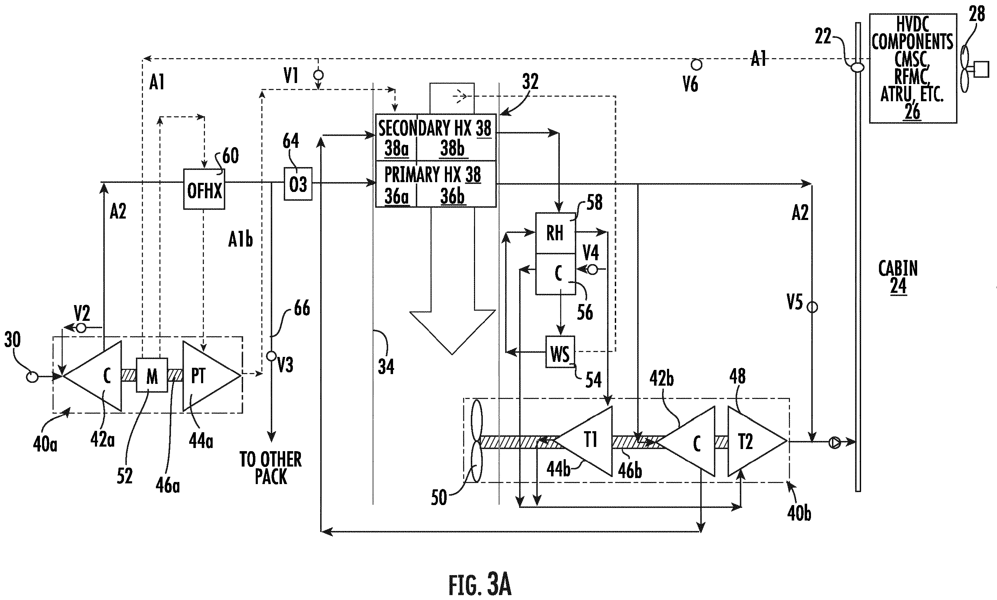

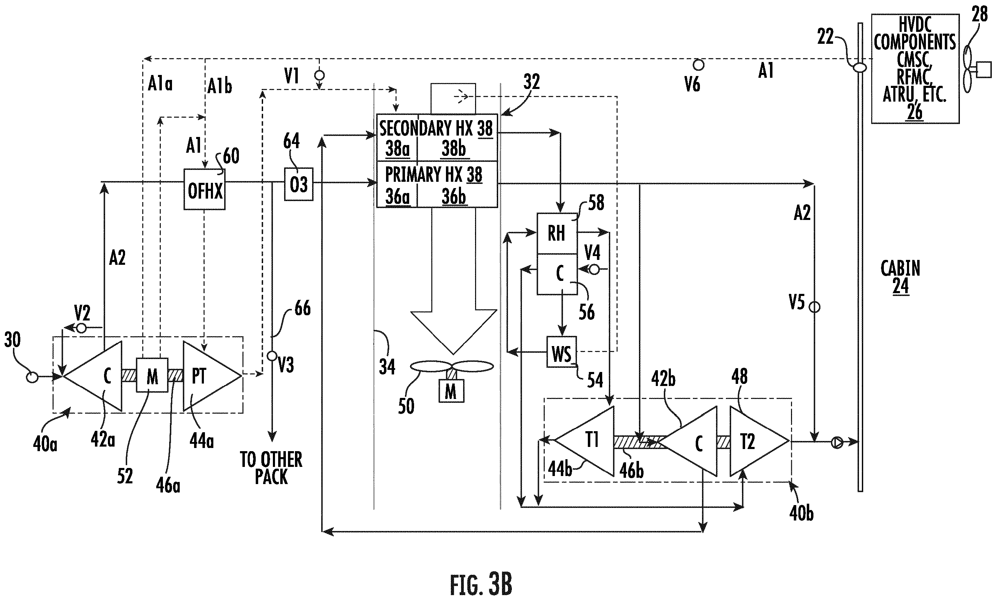

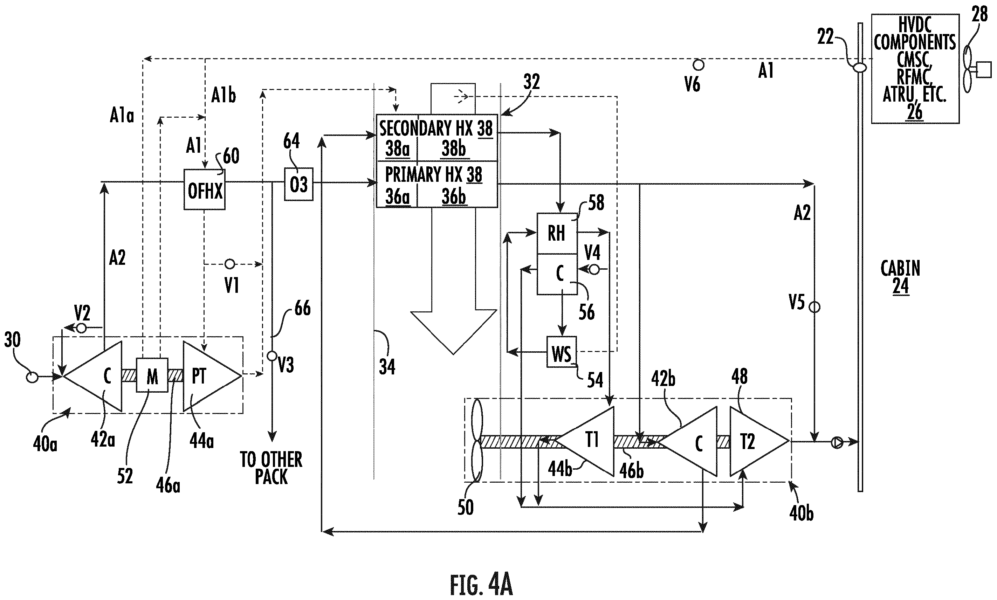

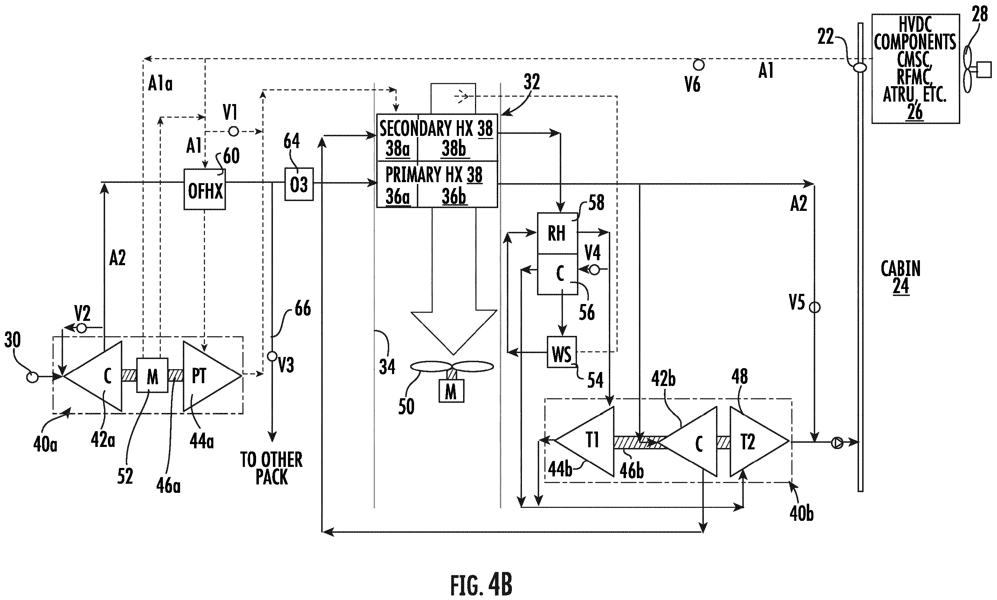

However, in other embodiments, such as shown in FIGS. 3A, 3B, 4A, and 4B, the dehumidification system includes at least a condenser 56 and a water extractor 54, the water extractor 54 being arranged downstream from the condenser 56. The condenser 56 is a particular type of heat exchanger. Further, in an embodiment, the dehumidification system additionally includes a reheater 58.

The elements of the ECS 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the ECS 20 can be regulated to a desired value. For instance, a first valve V1 is configured to allow all or at least a portion of the first medium A1 to bypass all or a portion of the first compression device 40a and a second valve V2 is configured to redirect a flow of the second medium from the outlet of the compressor 42a back to an inlet of the compressor 42a. A third valve V3 may be operable to direct all or at least a portion of the flow of second medium within the ECS 20 to another ECS pack. Valve V4 is operable to allow the flow of second medium A2 to bypass the first turbine 44b of the second compression device 40b and valve V5 is operable to allow the flow second medium A2, such as the flow of second medium A2 from the primary heat exchanger 36 for example, to bypass the remainder of the ECS 20. In an embodiment, the remainder of the ECS 20 includes the second compression device 40b and the dehumidification system. A sixth valve V6 may be configured to control a supply of the first medium A1 to the ECS 20.

With reference to embodiments illustrated in FIGS. 1 and 2, the ECS 20 is operable in a plurality of modes, selectable based on a flight condition of the aircraft. For example, the ECS 20 may be operable in a first, low altitude mode or a second, high altitude mode. The first mode is typically used for ground and low altitude flight conditions, such as ground idle, taxi, take-off, and hold conditions, and the second mode may be used at high altitude cruise, climb, and descent flight conditions.

During operation of the ECS 20 in a first, low altitude mode, a flow of the first medium A1 is provided to the ECS 20 via inlet 22. More specifically, the fan or movement mechanism 28 is operational to deliver the first medium A1, which may have been used to cool one or more electronic components of the aircraft prior to entering the ECS 20. In the first, low altitude mode, valve V1 is open. As shown in the non-limiting embodiment of FIGS. 1A and 1B, a bypass conduit including bypass valve V1 is arranged upstream from the first compression device 40a. As a result, only a first portion A1a of the first medium A1 is provided to the first compression device 40a and a second portion A1b of the first medium A1 is configured to bypass the first compression device 40a via the valve V1.

The first portion A1a of the first medium A1 may be configured to make a single pass, or alternatively, a plurality of passes about an exterior of and/or through a housing of the motor 52. Because a temperature of the first medium A1 is cooler than the one or more electronics of the motor 52, heat is transferred from the motor 52 and its electronics to the first medium A1. The first portion A1a of the first medium A1 that has been heated by the motor 52 is then provided to an outflow heat exchanger 60. However, in other embodiments (see FIG. 1B), only some of the first portion A1a of the first medium A1 is provided to the motor 52. In such embodiments, part of the first portion A1a is configured to bypass the motor 52 and is provided directly to the outflow heat exchanger 60. In such embodiments, the first portion A1a of the first medium A1 that was used to cool the motor 52 is rejoined with the remainder of the first portion A1a of the first medium A1 at a location at or upstream from the inlet of the outflow heat exchanger 60.

With continued reference to FIGS. 1A and 1B, within the outflow heat exchanger 60, the first portion A1a of the first medium A1 is configured to absorb heat from a second medium A2. The warm first medium A1 output from the outflow heat exchanger 60 is then provided to an inlet of the turbine 44a of the first compression device 40a. Because the volume is not pressurized when the aircraft is in the first, low altitude mode, minimal work is extracted from the first portion A1a of the first medium A1 within the turbine 44a. Accordingly, in a first, low altitude mode of operation, the motor 52 is relied upon to drive the compressor 42a. The first portion A1a of the first medium A1 output from the turbine 44a is then rejoined with the second portion A1b of the first medium A1 that bypassed the first compression device 40a at a location upstream from the ram air circuit 32.

In another embodiment, best shown in FIGS. 2A, the entirety of the first medium A1 provided to the ECS 20 is used to cool the motor 52. However, in other embodiments, as shown in FIG. 2B, only some of the first medium A1 is provided to the motor 52. As shown, a first portion A1a of the first medium A1 is provided to the motor 52 of the first compression device 40a and a second portion A1b of the first medium A1 is configured to bypass the motor 52. In such embodiments, the first portion A1a of the first medium A1 that was used to cool the motor 52 is rejoined with the remainder of the first portion A1a of the first medium A1 at or upstream from the inlet of the outflow heat exchanger 60.

In the non-limiting embodiments of FIGS. 2A and 2B, the bypass conduit including valve V1 is located either directly upstream from the outflow heat exchanger 60 or is located downstream from the outflow heat exchanger 60 and upstream from the inlet of the turbine 44a of the first compression device 40a. When the bypass conduit is located upstream from the outflow heat exchanger 60, the rejoined first and second portions (A1a and A1b) of the first medium A1 are configured to bypass both the outflow heat exchanger 60 and the turbine 44a. In embodiments where the bypass conduit is located downstream from the outflow heat exchanger 60 and upstream form the turbine 44a, the warmed first portion A1a of the first medium A1 rejoined with the second portion A1b of the first medium A1 passes through the outflow heat exchanger 60 before bypassing the turbine 44a.

Regardless of the location of the first valve V1, the first medium A1, resulting from the mixing of the first portion A1a and the second portion A1b of the first medium A1, may be used to cool a portion of the second medium A2 within at least one of the ram air heat exchangers. In the illustrated, non-limiting embodiment, both the primary heat exchanger 36 and the secondary heat exchanger 38 are separated into a respective first portion 36a, 38a and second portion 36b, 38b by a divider 62. In an embodiment, the first medium A1 is delivered to the first portion 36a, 38a of the ram air heat exchangers. From the ram air circuit 32, the first medium A1 may be exhausted overboard.

At the same time that the first medium A1 is provided to the ECS 20 via inlet 22, the second medium A2 is provided to the ECS 20 via inlet 30. From the inlet 30, the second medium A2 may be provided directly to an inlet of the compressor 42a of the first compression device 40a. The act of compressing the second medium A2, heats the second medium A2 and increases the pressure of the second medium A2. The heated second medium A2 output from the compressor 42a is provided to the outflow heat exchanger 60, where heat is transferred from the second medium A2 to the first medium A1. In an embodiment, a portion of the second medium A2 output from the compressor 42a may be returned directly to the inlet of the compressor 42a via valve V2.

The second medium A2 output from the outflow heat exchanger 60 may be provided to an ozone converter 64 before being provided to the primary heat exchanger 36 of the ram air circuit 32. In embodiments where valve V3 is open, a portion of the second medium A2 output from the outflow heat exchanger 60 will be diverted to another air conditioning pack via a crossover duct 66. The other air conditioning pack may have a substantially similar configuration, or alternatively, a different configuration than the pack illustrated by ECS 20.

The flow of second medium A2 provided to the primary heat exchanger 36 is configured to flow through the first portion 36a and the second portion 36b of the primary heat exchanger 36 in series. Within the first portion 36a of the primary heat exchanger 36, the second medium A2 is cooled by a flow of the first medium A1. Within the second portion 36b of the primary heat exchanger 36, the already cool second medium A2 is further cooled by a flow of ram air driven by the fan 50. From the ram air circuit 32, the second medium A2 is provided to the second compression device 40b. In an embodiment, the second medium A2 is provided from the ram air circuit 32 to an inlet of the compressor 42b of the second compression device 40b. Within the compressor 42b, the temperature and the pressure of the second medium A2 increases.

From the compressor 42b, the second medium A2 is returned to the ram air circuit 32. As shown, the second medium A2 is similarly provided to the first portion 38a and the second portion 38b of the secondary heat exchanger 38 in series. Within the first portion 38a of the secondary heat exchanger 38, the second medium A2 is cooled by the flow of the first medium A1, and within the second portion 38b, the second medium A2 is cooled by a flow of ram air driven by the fan 50.

From the ram air circuit 32, the second medium A2 is provided to the turbine 44b of the second compression device 40b. Within the turbine 44b, the second medium A2 is expanded and work is extracted therefrom. The work extracted therefrom is used to drive the compressor 42b. From the turbine 44b, the second medium A2 is provided to the water extractor 54, where water is removed from the second medium A2. Accordingly, the second medium A2 output from the water extractor 54 contains less water than the second medium A2 provided to the water extractor 54. The drier, second medium A2 is then provided to the second turbine 48 where further work is extracted from the second medium A2 and used to drive the compressor 42b. The cooler second medium A2 output from the second turbine 48 is provided to one or more loads of the aircraft, such as the cabin 24.

In the second, high altitude mode of operation, the flow path of the first and second mediums A1, A2 is similar to that in the first, low altitude mode of operation. However, in the high altitude mode of operation, the fan 28 need not be used to drive the flow of the first medium A1 through the inlet 22 and the ECS 20. Rather, the pressurization of the first medium A1 may be sufficient to drive the flow of the first medium A1 through the ECS 20. Further, in the high altitude mode, valve V1 is closed. As a result, the entire flow of the first medium A1 is provided to the outflow heat exchanger 60 and the first compression device 40a before being exhausted into the ram air circuit 32, and at least a portion of the first medium A1 is configured to cool the motor 52. Accordingly, in the high altitude mode of operation, both the turbine 44a and the motor 52 may be used to drive the compressor 42a.

With respect to the flow of the second medium A2, in the high altitude mode valve V4 is opened. As a result, the flow of the second medium A2 output from the secondary heat exchanger 38 is configured to bypass the turbine 44b. In such embodiments, the flow of the second medium A2 is provided from the secondary heat exchanger 38 to water extractor 54 and then to the second turbine 48 of the second compression device 40b. The cool, lower pressure second medium A2 output from the second turbine 48 may be delivered to one or more loads of the aircraft, such as the cabin 24.

With reference now to FIGS. 3A, 3B, 4A, and 4B, the embodiments of the ECS 20 and the corresponding flow paths are similar to the embodiments of FIGS. 1A, 1B, 2A, and 2B. More specifically, the flow path of the first medium A1 in both a low altitude mode and a high altitude mode is identical to the various possible flow paths described with respect to the embodiments of FIGS. 1A, 1B, 2A, and 2B. In the low altitude mode of operation, a fan 28 may be used to drive the flow through the ECS 20. Further, all or a portion of the first medium A1 may be configured to bypass the outflow heat exchanger 60 and/or the first compression device 40a. In the high altitude mode of operation, the pressurization of the first medium A1 may be sufficient to move the flow through the ECS 20, and the entire flow of the first medium A1 is provided to the outflow heat exchanger 60 and the turbine 44a of the first compression device 40a before being exhausted into the ram air circuit 32. In both the low altitude mode and the high altitude modes, at least a portion, and in some embodiments, the entirety of the first medium A1 is provided to the motor 52 of the first compression device 40a to cool the motor 52.

In the low altitude mode of operation of the ECS 20 of FIGS. 3A, 3B, 4A, and 4B, the second medium A2 is provided to the ECS 20 via inlet 30 at the same time that the first medium A1 is flowing through the ECS 20. From the inlet 30, the second medium A2 may be provided directly to an inlet of the compressor 42a of the first compression device 40a. The act of compressing the second medium A2, heats the second medium A2 and increases the pressure of the second medium A2. The heated second medium A2 output from the compressor 42a is provided to the outflow heat exchanger 60, where heat is transferred from the second medium A2 to the first medium A1.

The second medium A2 is compressed within the compressor 42a of the first compression device 40a and is cooled within the outflow heat exchanger 60. The second medium A2 output from the outflow heat exchanger 60 may be provided to an ozone converter 64 before being provided to the primary heat exchanger 36 of the ram air circuit 32. As previously described, the flow of second medium A2 provided to the primary heat exchanger 36 is configured to flow through the first portion 36a of the primary heat exchanger 36 and the second portion 36b of the primary heat exchanger 36 in series. Within the first portion 36a of the primary heat exchanger 36, the second medium A2 is cooled by a flow of the first medium A1. Within the second portion 36b of the primary heat exchanger 36, the already cool second medium A2 is further cooled by a flow of ram air driven by the fan 50. From the ram air circuit 32, the second medium A2 is provided to the second compression device 40b. In an embodiment, the second medium A2 is provided from the ram air circuit 32 to an inlet of the compressor 42b of the second compression device 40b. Within the compressor 42b, the temperature and the pressure of the second medium A2 increases.

From the compressor 42b, the second medium A2 is returned to the ram air circuit 32. As shown, the second medium A2 is similarly provided to the first portion 38a and the second portion 38b of the secondary heat exchanger 38 in series. Within the first portion 38a of the secondary heat exchanger 38, the second medium A2 is cooled by the flow of the first medium A1, and within the second portion 38b, the second medium A2 is cooled by a flow of ram air driven by the fan 50.

Unlike the ECS 20 of FIGS. 1A, 1B, 2A, and 2B, the second medium A2 output from the secondary heat exchanger 38 is provided to the dehumidification system, and more specifically, to the reheater 58 and condenser 56 in series, in which the second medium A2 is cooled, causing moisture within the cool second medium A2 to condense. Upon exiting the condenser 56, the second medium A2 enters the water extractor 54, where the condensed water or moisture is removed from the second medium A2. From the outlet of the water extractor 54, the drier second medium A2 makes another pass through the reheater 58. It is through this heat transfer relationship that heat from the second medium A2 output from the secondary heat exchanger 38 is provided to the second medium A2 output from the water extractor 54.

From the reheater 58, the dry second medium A2 is provided to the turbine 44b, such as through a nozzle. The second medium A2 is expanded across the turbine 44b and work is extracted therefrom. The extracted work drives the compressor 42b used to compress the second medium A2. The dry, second medium A2 is then provided to the second turbine 48 where further work is extracted from the second medium A2 and used to drive the compressor 42b. The cooler second medium A2 output from the second turbine 48 is provided to one or more loads of the aircraft, such as the cabin 24.

In the high altitude mode of operation of the ECS 20 of FIGS. 3A, 3B, 4A, and 4B, the flow of the second medium A2 between the inlet 30 and the dehumidification system may be substantially the same as in the low altitude mode of operation. However, in the high altitude mode of operation, valve V4 is open, and therefore the second medium A2 is configured to bypass the turbine 44b. As a result, after the second pass of the second medium A2 through the reheater 58, in which the second medium A2 absorbs heat, the second medium A2 is configured to make a second pass through the condenser 56. During operation in the low altitude mode, no significant heat transfer occurs within the condenser 56 because only a single fluid, the flow of the second medium A2 output from the first pass of the reheater 58 passes therethrough. In the high altitude mode of operation, however, heat is transferred from the flow of the second medium A2 within the first pass of the condenser 56 (to be provided to the water extractor 54) to the flow of the second medium A2 in the second pass of the condenser 56.

From the second pass of the condenser 56, the second medium A2 is provided to an inlet of the second turbine 48, such as via a nozzle. Within the second turbine 48, work is extracted and used to drive the compressor 42b used to compress the second medium A2. The cooler second medium A2 output from the second turbine 48 may then be provided to one or more loads of the aircraft, such as the cabin 24.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system (20) comprising:
a compression device (40a, 40b) including a compressor (42a, 42b), a turbine (44a, 44b), and an electric motor (52) operably coupled by a shaft (46a, 46b),
**characterised in that** the electric motor (52) and the turbine (44a, 44b), are arranged in series relative to a flow of a first medium (A1); and the turbine (44a, 44b), is arranged downstream from the electric motor (52) relative to the flow of the first medium (A1).

2. The environmental control system (20) of claim 1, wherein the flow of the first medium (A1) is configured to remove heat from one or more electronics of the electric motor (52).

3. The environmental control system (20) of claim 1 or 2, wherein the environmental control system (20) is operable in a plurality of modes including a first mode and a second mode, and a first portion of the flow of the first medium (A1) is provided to the electric motor (52) and the turbine (44a, 44b) in series in both the first mode and the second mode.

4. The environmental control system (20) of claim 3, wherein in the first mode, a second portion of the flow of the first medium (A1) is configured to bypass the compression device (40a, 40b).

5. The environmental control system (20) of claim 3 or 4, wherein in the first mode, the flow of the first medium (A1) is driven by a fan (50).

6. The environmental control system (20) of claim 3, 4 or 5, wherein in the second mode, the flow of the first medium (A1) is driven by a pressure of the first medium (A1).

7. The environmental control system (20) of any of claims 3 to 6, wherein in the first mode, the compressor (42a, 42b) is driven by the electric motor (52).

8. The environmental control system (20) of any of claims 3 to 7 wherein in the second mode, the compressor (42a, 42b) is driven by the electric motor (52) and the turbine (44a, 44b).

9. The environmental control system (20) of any preceding claim, wherein the environmental control system (20) is part of an aircraft and the first medium (A1) is cabin air.

## Patentansprüche

1. Klimasteuersystem (20), Folgendes umfassend:
eine Kompressionsvorrichtung (40a, 40b), die einen Kompressor (42a, 42b), eine Turbine (44a, 44b) und einen Elektromotor (52) beinhaltet, die durch eine Welle (46a, 46b) betriebsmäßig gekoppelt sind,
**dadurch gekennzeichnet, dass** der Elektromotor (52) und die Turbine (44a, 44b) in Reihe relativ zu einem Fluss eines ersten Mediums (Al) angeordnet sind; und die Turbine (44a, 44b) relativ zu dem Fluss des ersten Mediums (Al) stromabwärts von dem Elektromotor (52) angeordnet ist.

2. Klimasteuersystem (20) nach Anspruch 1, wobei der Fluss des ersten Mediums (Al) so konfiguriert ist, dass er Wärme von einer oder mehreren elektronischen Elementen des Elektromotors (52) abführt.

3. Klimasteuersystem (20) nach Anspruch 1 oder 2, wobei das Klimasteuersystem (20) in einer Vielzahl von Modi einschließlich eines ersten Modus und eines zweiten Modus betreibbar ist und ein erster Anteil des Flusses des ersten Mediums (Al) sowohl in dem ersten Modus als auch in dem zweiten Modus dem Elektromotor (52) und der Turbine (44a, 44b) in Reihe zugeführt wird.

4. Klimasteuersystem (20) nach Anspruch 3, wobei in dem ersten Modus ein zweiter Anteil des Flusses des ersten Mediums (Al) so konfiguriert ist, dass er die Kompressionsvorrichtung (40a, 40b) umgeht.

5. Klimasteuersystem (20) nach Anspruch 3 oder 4, wobei in dem ersten Modus der Fluss des ersten Mediums (Al) durch ein Gebläse (50) angetrieben wird.

6. Klimasteuersystem (20) nach Anspruch 3, 4 oder 5, wobei in dem zweiten Modus der Fluss des ersten Mediums (Al) durch einen Druck des ersten Mediums (Al) angetrieben wird.

7. Klimasteuersystem (20) nach einem der Ansprüche 3 bis 6, wobei in dem ersten Modus der Kompressor (42a, 42b) durch den Elektromotor (52) angetrieben wird.

8. Klimasteuersystem (20) nach einem der Ansprüche 3 bis 7, wobei in dem zweiten Modus der Kompressor (42a, 42b) durch den Elektromotor (52) und die Turbine (44a, 44b) angetrieben wird.

9. Klimasteuersystem (20) nach einem der vorhergehenden Ansprüche, wobei das Klimasteuersystem (20) Teil eines Luftfahrzeugs ist und das erste Medium (Al) Kabinenluft ist.

## Revendications

1. Système de commande environnementale (20) comprenant :
un dispositif de compression (40a, 40b) comportant un compresseur (42a, 42b), une turbine (44a, 44b) et un moteur électrique (52) couplés de manière fonctionnelle par un arbre (46a, 46b),
**caractérisé en ce que** le moteur électrique (52) et la turbine (44a, 44b) sont agencés en série par rapport à un flux d'un premier milieu (Al) ; et la turbine (44a, 44b) est agencée en aval du moteur électrique (52) par rapport au flux du premier milieu (Al).

2. Système de commande environnementale (20) selon la revendication 1, dans lequel le flux du premier milieu (Al) est configuré pour éliminer la chaleur d'un ou plusieurs composants électroniques du moteur électrique (52).

3. Système de commande environnementale (20) selon la revendication 1 ou 2, dans lequel le système de commande environnementale (20) peut fonctionner dans une pluralité de modes comportant un premier mode et un second mode, et une première partie du flux du premier milieu (Al) est fournie au moteur électrique (52) et à la turbine (44a, 44b) en série à la fois dans le premier mode et dans le second mode.

4. Système de commande environnementale (20) selon la revendication 3, dans lequel, dans le premier mode, une seconde partie du flux du premier milieu (Al) est configurée pour contourner le dispositif de compression (40a, 40b).

5. Système de commande environnementale (20) selon la revendication 3 ou 4, dans lequel, dans le premier mode, le flux du premier milieu (Al) est entraîné par un ventilateur (50) .

6. Système de commande environnementale (20) selon la revendication 3, 4 ou 5, dans lequel, dans le second mode, le flux du premier milieu (Al) est entraîné par une pression du premier milieu (A1).

7. Système de commande environnementale (20) selon l'une quelconque des revendications 3 à 6, dans lequel, dans le premier mode, le compresseur (42a, 42b) est entraîné par le moteur électrique (52).

8. Système de commande environnementale (20) selon l'une quelconque des revendications 3 à 7, dans lequel, dans le second mode, le compresseur (42a, 42b) est entraîné par le moteur électrique (52) et la turbine (44a, 44b).

9. Système de commande environnementale (20) selon une quelconque revendication précédente, dans lequel le système de commande environnementale (20) fait partie d'un aéronef et le premier milieu (Al) est l'air de cabine.
